(19) Europäisches Patentamt
European Patent Office
Office européen des brevets

(11) Numéro de publication: **0 039 280**
**A1**

# (12) DEMANDE DE BREVET EUROPEEN

(21) Numéro de dépôt: **81400635.9**

(22) Date de dépôt: **22.04.81**

(51) Int. Cl.³: **H 02 H 3/33**

(30) Priorité: **30.04.80 FR 8009938**

(43) Date de publication de la demande: **04.11.81 Bulletin 81/44**

(84) Etats contractants désignés: **BE CH DE GB IT LI NL**

(71) Demandeur: **MERLIN GERIN**
**Rue Henri Tarze**
**F-38050 Grenoble Cedex(FR)**

(72) Inventeur: **Bonniau, Michel**
**Merlin Gerin Rue Henri Tarze**
**F-38050 Grenoble Cedex(FR)**

(74) Mandataire: **Kern, Paul et al,**
**Merlin Gerin 20, rue Henri Tarze, 83 X**
**F-38041 Grenoble Cedex(FR)**

(54) **Dispositif de protection différentielle sensible à un courant unidirectionnel.**

(57) L'invention est relative à un dispositif de protection différentielle à propre courant dont le fonctionnement n'est pas affecté par la présence d'un courant unidirectionnel.

Une capacité (68, 70, 72) est insérée dans le circuit secondaire reliant l'enroulement secondaire (16) d'un tore de détection de courant différentiel (14) à une bobine (20) d'un relais déclencheur (22), de manière à créer un filtre de mise en forme du signal de défaut.

Le dispositif de protection peut être associé à un disjoncteur électrique.

Fig.16

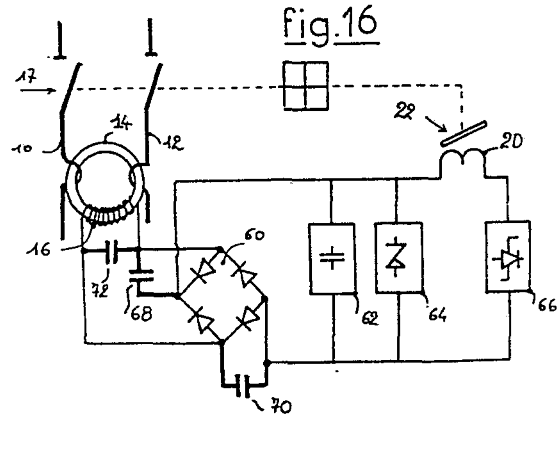


EP 0 039 280 A1

Croydon Printing Company Ltd.

DISPOSITIF DE PROTECTION DIFFERENTIELLE SENSIBLE A UN COURANT UNIDIRECTIONNEL.

L'invention est relative à un dispositif de protection différentielle à propre courant d'une installation de courant alternatif comprenant :

- un transformateur différentiel ayant un tore, des enroulements primaires, éventuellement à simple passage des conducteurs de l'installation et un enroulement secondaire aux bornes duquel apparaît un signal de défaut différentiel lorsque la somme des courants parcourant les enroulements primaires n'est pas nulle,
- une bobine de déclenchement d'un appareil de coupure de courant,
- et un circuit secondaire de connexion de la bobine aux bornes de l'enroulement secondaire, agencé pour provoquer le déclenchement lorsque ledit signal dépasse un seuil prédéterminé, ledit circuit secondaire comprenant un condensateur.

Le brevet français N° 2.422.277 décrit un dispositif de protection différentielle du genre mentionné conçu pour être associé à un disjoncteur de protection qui déclenche pour un faible courant de défaut, par exemple de 30 mA, de manière à assurer une protection efficace des usagers. Le dispositif connu donne entière satisfaction en régime sinusoïdal de courant de défaut, mais son fonctionnement peut être affecté par un courant unidirectionnel, produit par l'effet redresseur de dispositifs électroniques semi-conducteurs fréquemment utilisés dans des appareils tels que des récepteurs de radio ou de télévision ou des régulateurs de moteur. Lorsque le tore de détection du dispositif de protection est soumis à un champ sinusoïdal on obtient au secondaire une tension quasiment sinusoïdale et l'utilisation d'un déclencheur électromagnétique polarisé ne présente pas d'inconvénient majeur. Le déclencheur utilise une seule alternance du signal et dans ce cas ces deux alternances sont symétriques, et l'une et l'autre engendrent des seuils de déclenchement voisins. Si par contre le courant de défaut est unidirectionnel la tension obtenue au secondaire du tore ne présente plus deux alternances symétriques et le déclencheur électromagnétique polarisé fonctionne pour des seuils différents selon qu'il utilise l'une ou l'autre des deux alternances.

La présente invention a pour but de remédier à ces inconvénients et de permettre la réalisation d'un dispositif différentiel à propre courant dont le fonctionnement n'est pas influencé sensiblement par la présence d'un courant unidirectionnel.

Le dispositif selon l'invention est caractérisé par le fait que les impédances de l'enroulement secondaire, de la bobine et du condensateur sont déterminées pour former un filtre passif passe bas, de mise en forme du signal délivré par l'enroulement secondaire, d'un gain voisin de 1 pour la fréquence du courant alternatif, de manière à conserver un même seuil de déclenchement en régime de courant alternatif, en régime de courant de défaut redressé simple ou double alternance et en régime de courant de défaut haché unidirectionnel ou non.

La présente invention part de la constatation qu'en régime de défaut redressé ou haché le signal apparaissant aux bornes de l'enroulement secondaire est une fonction périodique non sinusoïdale en fonction du temps et que cette fonction peut être considérée comme la somme de fonctions sinusoïdales obtenues par un développement de Fourier, le filtre passe bas permettant une sélection du signal de fréquence fondamentale sinusoïdale. Le signal alternatif non sinusoïdal est donc traité pour former un signal alternatif symétrique de faible déformation, qui provoque le déclenchement du disjoncteur comme tout signal de défaut sinusoïdal.

Selon un développement de l'invention et un procédé connu décrit dans le brevet français N° 1.263.312, les impédances du condensateur et les impédances de l'enroulement secondaire et de la bobine forment un circuit résonant d'amplification du signal de déclenchement.

Le condensateur peut être connecté en série ou en parallèle ou selon une combinaison série - parallèle avec l'enroulement secondaire du tore de détection d'une manière bien connue en soi. Le dispositif de protection à filtre passif selon l'invention donne entière satisfaction en étant appliqué à un dispositif du type décrit dans le brevet français N° 2.422.277, dans lequel le signal est redressé dans un pont à double alternance et alimente un système d'accumulation à condensateur. Une diode Zener connectée aux bornes du système d'accumulation provoque le déclenchement d'un interrupteur électronique lorsque la tension du système d'accumulation atteint la tension de seuil de la diode Zener, telle que la décharge du condensateur alimente la bobine de déclenchement du disjoncteur.

Les valeurs du filtre passif passe bas, notamment la capacité du condensateur et les impédances de l'enroulement secondaire de la bobine, sont calculées ou déterminées par les méthodes usuelles de détermination des valeurs des filtres électriques bien connues des spécialistes. A titre d'exemple, certains cas particuliers relativement simples sont décrits ci-dessous en référence aux figures.

Il est facile de voir que le dispositif selon l'invention est particulièrement simple et permet de conserver le dispositif à propre courant dont la fiabilité et la sécurité de fonctionnement sont remarquables.

D'autres avantages et caractéristiques ressortiront plus clairement de la description qui va suivre de différents modes de mise en oeuvre de l'invention, donnés à titre d'exemples non limitatifs et représentés aux dessins annexés, dans lesquels :

la figure 1 est une vue schématique d'un dispositif de protection selon l'invention, ayant un condensateur connecté en série de l'enroulement secondaire du tore de détection;

les figures 2, 3 et 4 sont des vues analogues à celle de la figure 1, montrant respectivement un condensateur connecté en parallèle et des combinaisons de condensateurs en série parallèle, de l'enroulement secondaire;

la figure 5 illustre un cas particulier de mise en forme du signal secondaire;

la figure 6 est une vue analogue à celle de la figure 5, illustrant un autre cas de mise en forme du signal secondaire;

la figure 7 est un autre mode de représentation du schéma selon la figure 4;

la figure 8 est un schéma du filtre selon la figure 7;

la figure 9 est une vue analogue à celle de la figure 8, représentant un cas particulier de filtre;

les figures 10 à 13 sont des vues analogues aux figures 1 à 4, utilisant un système d'accumulation d'énergie inséré dans le circuit secondaire;

la figure 14 est un autre mode de représentation du schéma de la figure 10, dans un cas particulier;

les figures 15 et 16 représentent deux schémas particuliers d'un dispositif selon l'invention, utilisant un pont redresseur à double alternance;

les figures 17 à 20 représentent différentes variantes de réalisation, à source extérieure.

Sur les différentes figures, une installation électrique (non représentée) est alimentée par deux conducteurs 10, 12, passant dans un tore 14, qui porte un enroulement secondaire 16. Le tore 14 constitue un transformateur différentiel dont le courant secondaire est fonction de la somme des courants primaires parcourant les conducteurs 10, 12. Un disjoncteur de protection 17 est branché sur les conducteurs 10, 12 pour interrompre l'alimentation de l'installation en cas de défaut à la terre, détecté par le transformateur à tore 14. Aux bornes de l'enroulement secondaire 16 est connecté un circuit secondaire 18 de déclenchement, qui alimente une bobine 20 d'un relais déclencheur 22. Le relais déclencheur 22 commande le déclenchement du disjoncteur 17 lorsque le signal de défaut délivré à la bobine 20 dépasse un seuil prédéterminé de déclenchement. Le relais déclencheur 22 est avantageusement du type polarisé utilisant une seule alternance du signal, mais il peut également être sensible aux deux alternances de ce signal. Le circuit secondaire 18 se résume, dans le mode de mise en oeuvre simplifié de l'invention, représenté à la figure 1, à un condensateur 24, connecté en série de l'enroulement secondaire 16. Par exemple dans le cas de la figure 1, la capacité 24 a pour but de composer un filtre de mise en forme avec les inductances du tore détecteur 16 et du relais déclencheur 22. La valeur de la capacité 24 est déterminée par les moyens usuels de calcul et de détermination des filtres; elle tient compte du nombre de spires de l'enroulement secondaire 16 et de la bobine 20 ainsi que des matériaux mis en jeu et plus particulièrement de la rémanence et de la réluctance du matériau magnétique du tore 14. Le condensateur peut bien entendu être connecté différemment (fig. 2, 3, 4). Un exemple particulièrement évident de mise en forme d'un signal secondaire est illustré par la figure 5. L'installation alimentée par les conducteurs 10, 12 comporte dans ce cas un élément redresseur (non représenté) et un défaut vers la terre en aval de l'élément redresseur fait apparaître un courant de défaut redressé simple alternance, illustrée par la courbe 46 de la figure 5. La courbe 48 de la figure 5 est une image de la tension aux bornes de l'enroulement 16 du tore 14 sans utilisation de la capacité de mise en forme 36, et il est facile de voir que ce signal présente des dissymétries susceptibles d'affecter le fonctionnement du relais détecteur 22. L'image de cette même tension secondaire avec utilisation d'une capacité 36 de mise en forme de valeur appropriée est représentée par la courbe 50 de la figure 5. La courbe 50 représente un signal sinusoïdal légèrement déformé, mais les valeurs de crête des deux alternances du signal 50 et l'énergie de chaque alternance sont sensiblement égales. Le relais déclencheur 22 est indifféremment déclenché par l'une quelconque des alternances du signal de la courbe 50. Le signal de défaut émis par le tore détecteur 14 dépend de la structure de ce dernier et ce signal n'est pas obligatoirement de la forme illustrée par la courbe 48. La figure 6 représente un autre cas particulier dans laquelle la courbe 52 est l'image du courant de défaut, la courbe 54 le courant secondaire du tore détecteur 14 sans mise en forme par une capacité, et la courbe 56 ce même courant secondaire avec mise en forme par un condensateur 24. Le signal 56 après mise en forme n'est pas identique au signal 50 représenté à la figure 5, mais les deux signaux sont alternés, c'est-à-dire que leurs valeurs maximales positive et négative ont sensiblement la même valeur absolue et que les aires de chaque alternance sont sensiblement égales. Le relais déclencheur 22 réagit de ce fait de la même manière à l'alternance positive ou à l'alternance négative du signal 56 qui lui est appliqué. Il est clair que l'emploi selon l'invention d'un filtre de mise en forme du signal de défaut délivré par le tore 14 permet de conserver un même seuil de déclenchement du dispositif de protection différentielle en régime de courant alternatif, en régime de courant de défaut redressé simple ou double alternance et en régime de courant de défaut haché unidirectionnel ou non.

Les figures 2, 3 et 4 illustrent trois variantes de réalisation selon l'invention, les mêmes numéros de repère étant utilisés dans toutes les figures pour désigner les éléments analogues ou identiques à ceux représentés à la figure 1. Dans la variante selon la figure 2, le circuit secondaire 18 comprend un condensateur 36 connecté en parallèle sur l'enroulement secondaire 16 du tore détecteur 14. Il est bien connu que la disposition d'une capacité 36 en parallèle d'une inductance, en l'occurrence de l'enroulement secondaire 16 et de la bobine 20, permet de constituer un filtre de mise en forme. Le fonctionnement est bien entendu identique à celui décrit ci-dessus en référence à la figure 1 et la valeur de la capacité 36 est judicieusement déterminée pour délivrer un signal alterné au relais déclencheur 22. Les figures 3 et 4 illustrent deux autres variantes utilisant des combinaisons de capacités série - parallèle 38, 40 et 42, 44, et il est clair que d'autres combinaisons peuvent être utilisées.

Il serait illusoire et superfétatoire de vouloir examiner la théorie générale des filtres et on développera ci-dessous uniquement une explication succincte du procédé de mise en forme en référence aux figures 7 et 8.

La figure 7 est une autre façon de représenter le montage de la figure 4, dans laquelle $E_2$ est la force électromotrice induite à l'enroulement secondaire 16 du tore 14, $r_2$ et $L_2$ sont respectivement la résistance et l'inductance de l'enroulement secondaire 16, r et $L_r$ sont respectivement la résistance et l'inductance du relais 22, et $C_1$ et $C_2$ sont respectivement les capacités des condensateurs 44 et 42. La figure 8 illustre le quadripôle correspondant. Dans le cas général où le filtre en té est chargé par le relais 22 d'impédance $Z_r = r + jL_r\omega$, l'expression du gain du filtre s'écrit :

$$G = \frac{(Z_1 + Z_3))Z_r + Z_2) + Z_1Z_3}{Z_3Z_r}$$

avec : $Z_1 \simeq jL_2\omega$, $Z_3 = \frac{-j}{C_1\omega}$ ; $Z_2 = \frac{-j}{C_2\omega}$ et $Z_r \simeq jL_r\omega$

En haute fréquence G tend vers l'infini, alors $U_R$ est très inférieur à $U_2$. En basse fréquence la valeur optimale du gain G est l'unité alors $U_R \simeq U_2$. On a un filtre passe bas et il convient donc, pour obtenir la mise en forme optimale, de choisir les éléments du montage tel que pour $\omega = \omega_0$, pulsation du fondamental à 50 Hz, le gain soit voisin de 1 et que pour les harmoniques de pulsation k $(\omega_0)$ le gain soit suffisamment grand pour que la tension $U_R$ devienne très inférieure à la tension $U_2$.

Dans un premier cas particulier, où le filtre en té débite sur une impédance suffisamment élevée pour qu'il puisse être considéré à vide, le gain du filtre s'écrit :
$G_o = \frac{U_2}{U_r} = 1 + \frac{Z_1}{Z_3}$ avec $Z_1$ et $Z_3$ tel qu'en hautes fréquences $Z_1 \gg Z_3$ et en basse fréquences $Z_1 \ll Z_3$. Il s'agit donc comme dans le cas général précédent de choisir convenablement les éléments de montage pour que ce filtre passe bas donne une mise en forme convenable. Une optimalisation du procédé de mise en forme est réalisable si après mise en forme l'impédance du condensateur d'une part et les impédances des inductances d'autre part du circuit secondaire 18 s'accordent pour former un circuit résonnant du type RLC série ou RLC parallèle. Une telle optimisation est décrite dans le brevet français 1.263;312 auquel on se référera avantageusement pour de plus amples détails.

Dans ce second cas particulier $Z_2$ est choisi tel qu'il entre en résonance avec $Z_R$ et Ie schéma du filtre en té de la figure 8 devient le schéma du filtre en L de la figure 9. L'expression du gain devient $G = 1 + \frac{Z_1}{Z_e}$ avec $Z_1 = jL_2\omega$ et $Z_e = \frac{\frac{-rj}{C_1\omega}}{r - \frac{j}{C_1\omega}}$. Tout comme dans les deux cas précédents, un choix approprié des éléments permet une mise en forme convenable.

Bien d'autres cas particuliers sont envisageables et conduisent à des solutions acceptables.

L'application du procédé selon l'invention peut s'étendre à des dispositifs de protection autonomes à accumulation d'énergie et les figures 10 à 13 illustrent les montages correspondant respectivement aux figures 1 à 4. Dans ces montages le circuit secondaire 18 comporte de plus un système à accumulation d'énergie 58 complété d'un dispositif à seuil d'un commutateur qui libère l'énergie emmagasinée dans le système à accumulation lorsque la tension atteint le seuil du dispositif de manière à actionner le relais déclencheur 22. Une réalisation particulière de la version schématisée à la figure 11, peut être obtenue en choisissant un système à accumulation 58 présentant une impédance très grande après la période transitoire d'accumulation. Le tore 14 est alors presque à vide puisqu'il débite uniquement dans la capacité 36 de mise en forme. Le circuit secondaire 18 se résume alors au schéma de la figure 14 composé d'un filtre LC avec $U_C$, la tension de charge de l'accumulateur.

Le système d'accumulation d'énergie 58 et le dispositif à seuil peuvent être du type décrit dans le brevet français précité N° 2.422.277.

Les figures 15 et 16 représentent deux autres variantes de réalisation utilisant le module électronique décrit dans le brevet français N° 2.422.277 et comportant un redresseur en pont à double alternance 60. Le signal délivré par l'enroulement secondaire 16 est redressé dans le pont 60 et charge une capacité 62 d'accumulation d'énergie. Aux bornes de la capacité d'accumulation 62 est branchée une diode Zener 64 qui déclenche un interrupteur électronique 66 lorsque la charge de la capacité 62 atteint la tension de seuil de la diode Zener 64 pour permettre la décharge de la capacité 62 à travers le relais 22 provoquant le déclenchement du disjoncteur 17. Dans le montage suivant la figure 15, les capacités 68 et 70 shuntant les diodes du pont redresseur 60 rendent le montage insensible aux parasites industriels. Selon la présente invention, le choix judicieux de ces capacités peut assurer en plus de l'immunité aux parasites une mise en forme du signal secondaire.

La figure 16 représente une variante où la mise en forme du signal secondaire peut être améliorée par la capacité additionnelle 72 connectée en parallèle sur le secondaire du tore. Le montage selon la figure 16 assure au dispositif différentiel des seuils de déclenchement quasi identiques en valeur efficace pour des régimes de défauts sinusoïdaux, des régimes de défaut haché unidirectionnel, des régimes de défaut redressé et même pour des régimes de défaut redressé légèrement filtré. A titre indicatif, on peut signaler que pour un dispositif de protection du type décrit dans le brevet français N° 2.422.277 avec un filtre de mise en forme du type illustré par la figure 16, la valeur des capacités peut être d'environ : 1 micro Farad pour le condensateur 72, 22 micro Farad pour le condensateur 68 et 33 micro Farad pour le condensateur 70.

Les figures 17, 18, 19 et 20 représentent une transposition de l'invention à des appareils de protection à source auxiliaire. Ces appareils comprennent une alimentation 74 et un amplificateur 76. Dans ce cas, le signal délivré par le secondaire du tore 16 intervient en tant que signal de commande de l'étage d'entrée de l'amplificateur 76. Les condensateurs 24, 36, 38, 40, 42 et 44 constituent un filtre et assurent, comme dans le cas des appareils à propre courant décrit précédemment, une mise en forme convenable du signal secondaire pour des courants de défauts unidirectionnels. Une solution particulièrement avantageuse consiste à choisir les différents éléments de l'appareil de telle sorte que le(s) condensateur(s) de mise en forme assure également la fonction de capacité de liaison entre le secondaire et l'amplificateur.

L'invention n'est bien entendu nullement limitée aux modes de mise en oeuvre plus particulièrement décrits, mais elle s'étend bien au contraire à toute variante restant dans le cadre des équivalences.

Revendications

1. Dispositif de protection différentielle à propre courant d'une installation de courant alternatif comprenant :
- un transformateur différentiel ayant un tore (14), des enroulements primaires éventuellement à simple passage des conducteurs (10, 12) de l'installation et un enroulement secondaire (16) aux bornes duquel apparaît un signal de défaut différentiel lorsque la somme des courants parcourant les enroulements primaires n'est pas nulle,
- une bobine (20) de déclenchement d'un appareil de coupure de courant (17),
- et un circuit secondaire (18) de connexion de la bobine aux bornes de l'enroulement secondaire agencé pour provoquer le déclenchement lorsque ledit signal dépasse un seuil prédéterminé, ledit circuit secondaire comprenant un condensateur (24; 36 à 42; 68 à 72),
- caractérisé par le fait que les impédances de l'enroulement secondaire (16), de la bobine (20) et du condensateur sont déterminées pour former un filtre passif passe bas, de mise en forme du signal délivré par l'enroulement secondaire, d'un gain voisin de 1 pour la fréquence du courant alternatif, de manière à conserver un même seuil de déclenchement en régime de courant alternatif, en régime de courant de défaut redressé simple ou double alternance et en régime de courant de défaut haché unidirectionnel ou non.

2. Dispositif selon la revendication 1, caractérisé par le fait que l'impédance du condensateur (24; 36 à 42; 68 à 72) et les impédances de l'enroulement secondaire (16) et de la bobine (20) sont de plus accordées pour former un circuit résonnant à la fréquence du courant alternatif.

3. Dispositif selon la revendication 1 ou 2, caractérisé en ce que le condensateur est connecté en série, en parallèle ou en une combinaison série, parallèle avec l'enroulement secondaire (16).

4. Dispositif selon la revendication 1, 2 ou 3, caractérisé en ce que le circuit secondaire (18) comporte un pont redresseur (60) à double alternance de redressement dudit signal de défaut.

5. Dispositif selon la revendication 1, 2, 3 ou 4, caractérisé en ce que le circuit secondaire (18) comporte un système d'accumulation d'énergie (62) et un dispositif à seuil (64) qui alimente la bobine par l'énergie accumulée lors du dépassement du seuil prédéterminé.

6. Dispositif selon la revendication 5, caractérisé en ce que le dispositif à seuil comporte une diode Zener (64) et un interrupteur électronique (66) piloté par la diode Zener devenant conductrice lorsque la tension du système d'accumulation atteint la tension de seuil de la diode Zener.

7. Dispositif selon les revendications 1, 2 ou 3, caractérisé par le fait que le filtre de mise en forme agit sur le signal de commande d'un dispositif à source auxiliaire.

fig.1

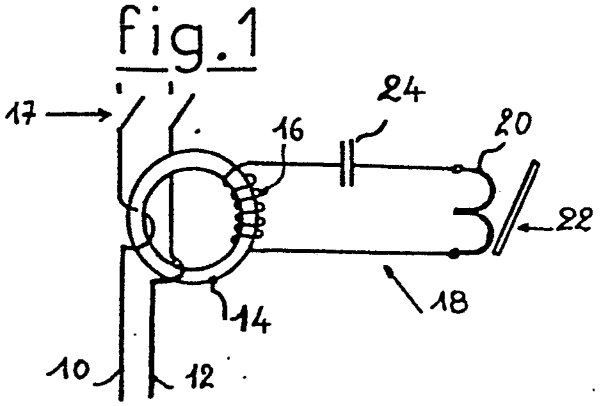


fig.2

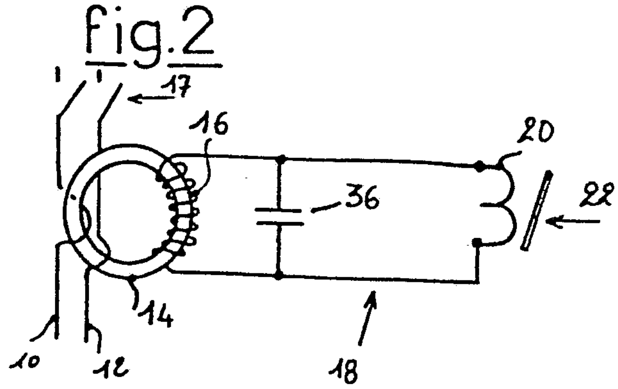


fig.3

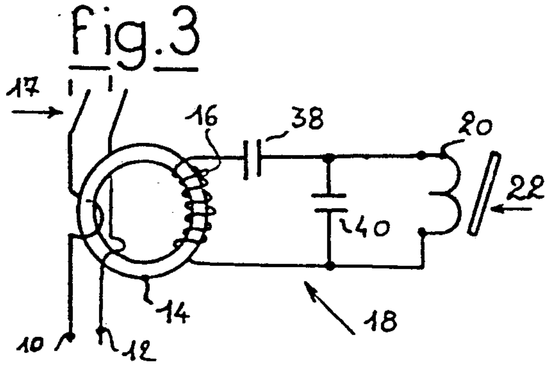


fig.4

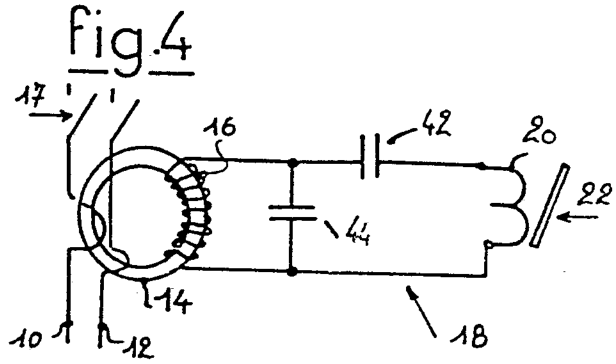


fig.5

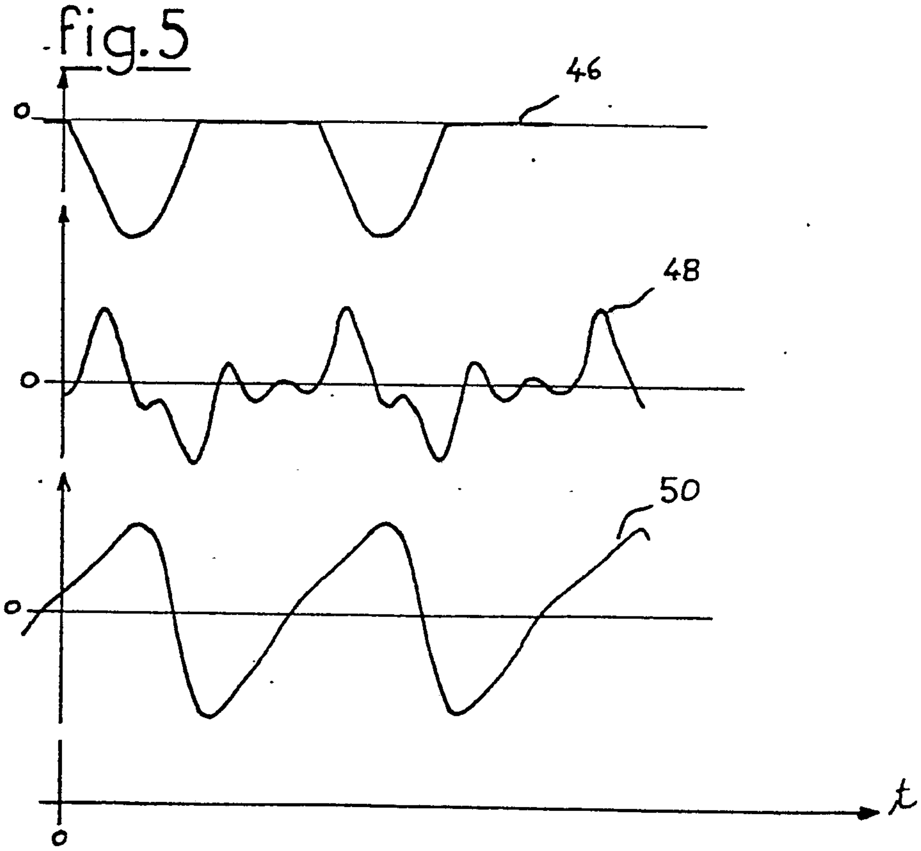

fig.6

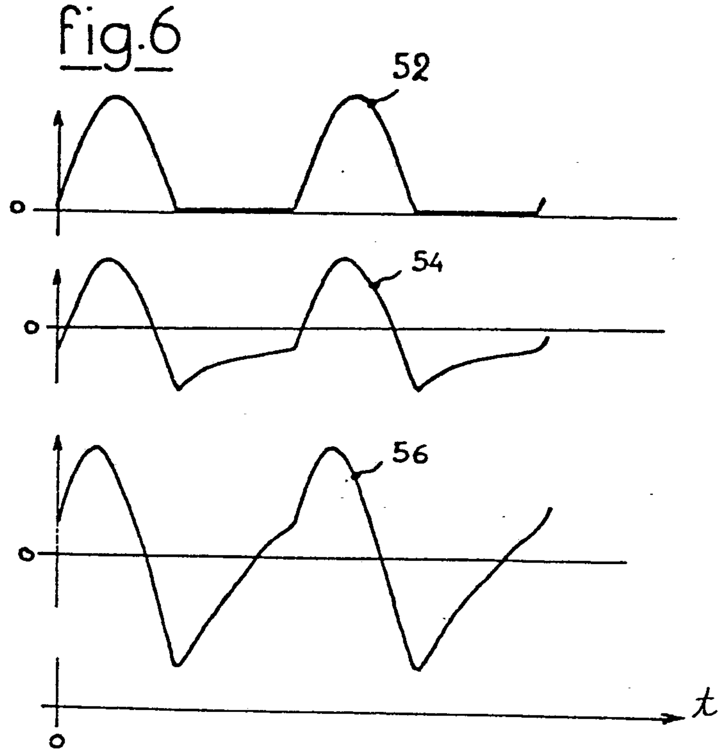


fig.7

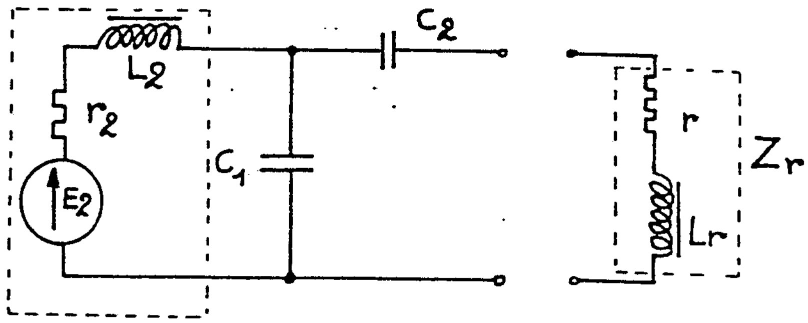


fig.8

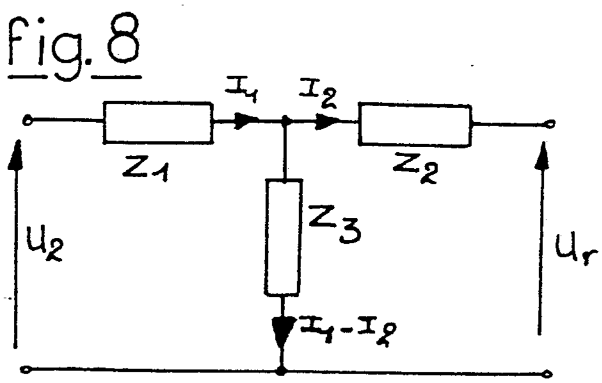

fig.9

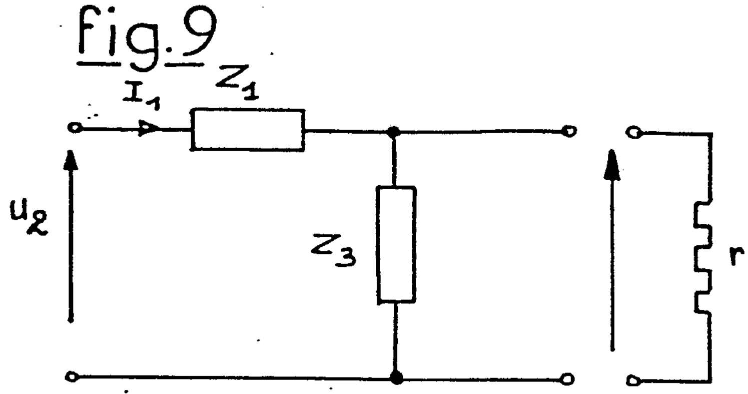


fig.11

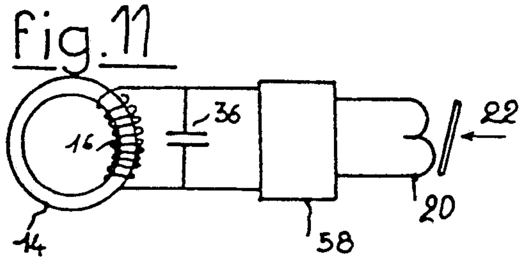


fig.10

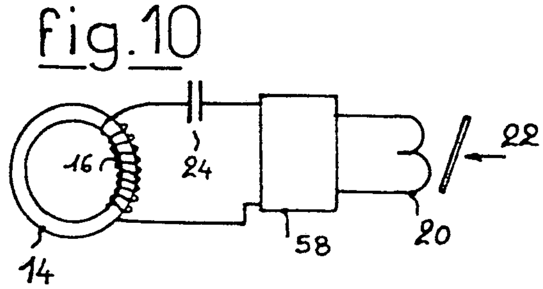


fig.13

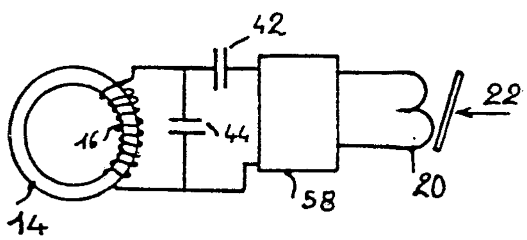


fig.12

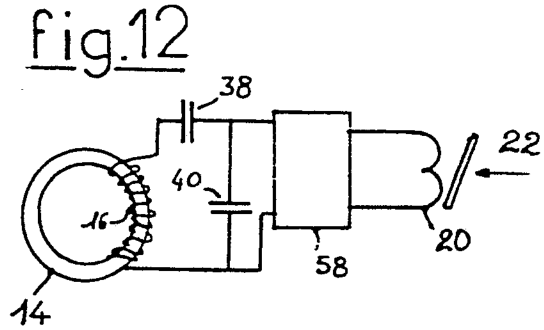


fig.14

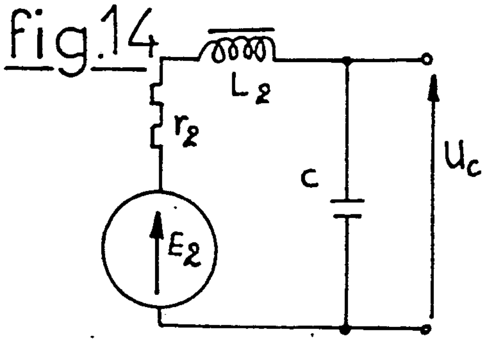

fig.15

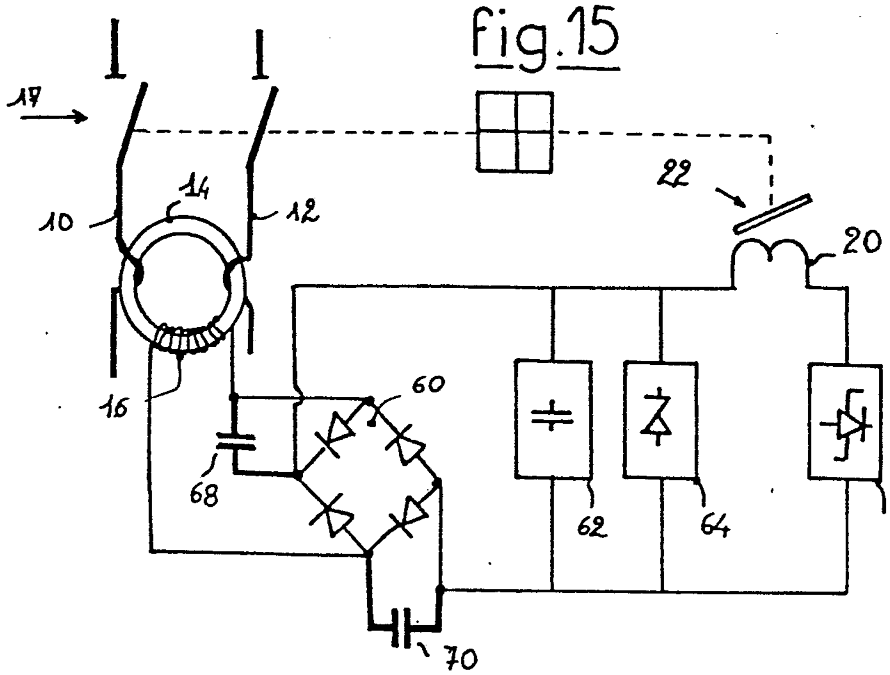
17
10
14
12
22
20
16
60
68
62
64
66
70

fig.16

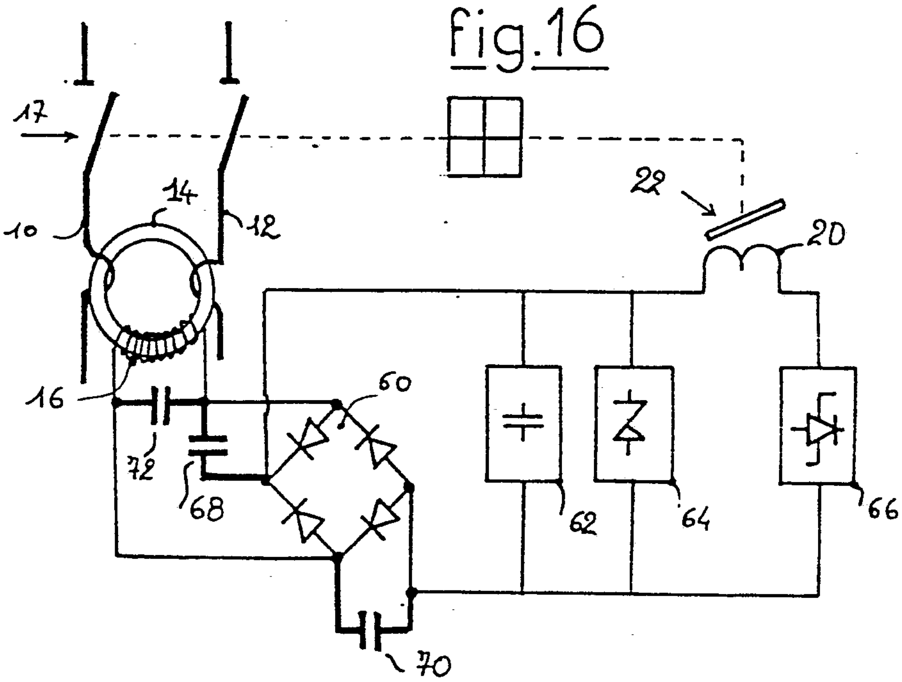
17
10
14
12
22
20
16
60
72
68
62
64
66
70

fig.17

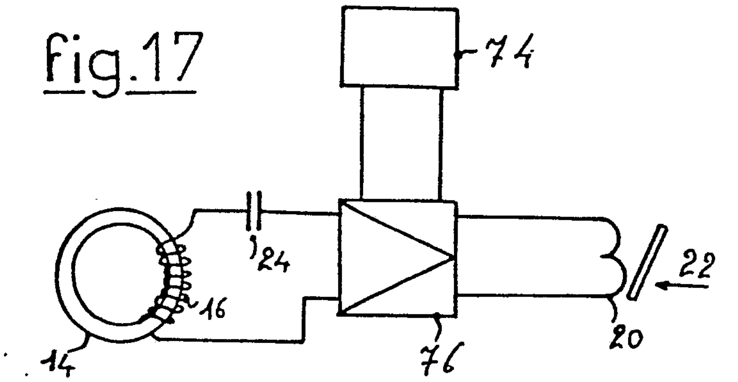


fig.18

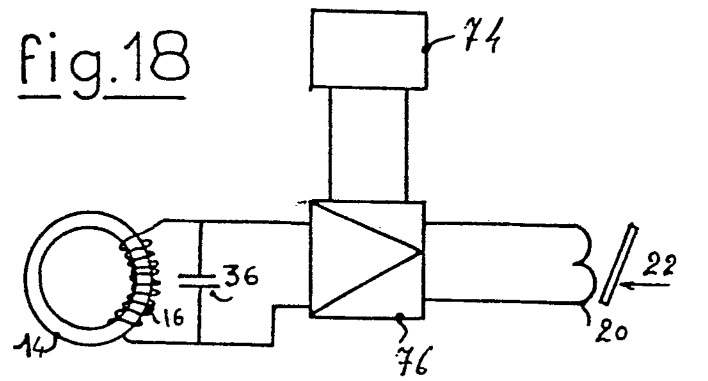


fig.19

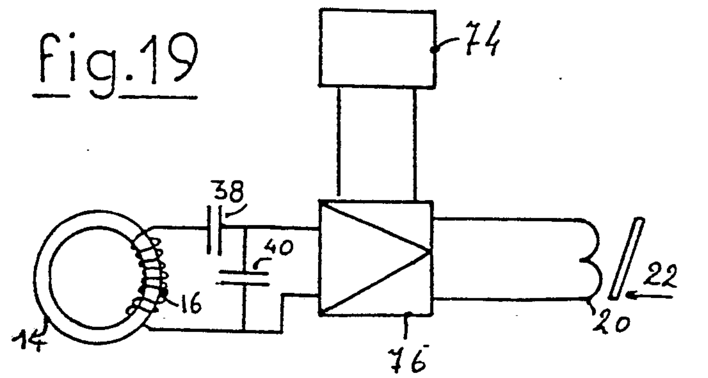


fig.20

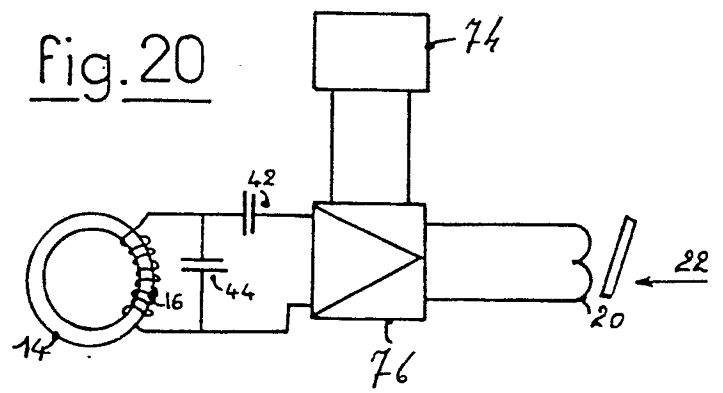

Office européen des brevets

**0039280**

Numéro de la demande

# RAPPORT DE RECHERCHE EUROPEENNE

EP 81 40 0635

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| X | FR - A - 2 099 548 (SIEMENS)<br>* Page 1, ligne 1 - page 2, ligne 2; page 2, lignes 18-31; page 3, ligne 1 - page 4, ligne 40; figures 1-4 *<br>-- | 1-3 | H 02 H 3/33 |
| | FR - A - 2 422 276 (SAPAREL)<br>* Page 1, ligne 1 - page 2, ligne 9; page 2, ligne 27 - page 3, ligne 22; figure 1 *<br>-- | 1,2 | DOMAINES TECHNIQUES RECHERCHES (Int. Cl.³) |
| | FR - A - 2 042 619 (AMCOR)<br>* Page 2, lignes 18-28; page 3, lignes 2-12; page 3, ligne 28 - page 5, ligne 28; figure 1 *<br>-- | 1-7 | H 02 H 3/33<br>3/32 |
| | FR - A - 2 087 280 (SAPAREL)<br>* Page 2, lignes 9,10; page 4, ligne 27 - page 5, ligne 35; figure 5 *<br>---- | 6 | |

CATEGORIE DES DOCUMENTS CITES

- X: particulièrement pertinent
- A: arrière-plan technologique
- O: divulgation non-écrite
- P: document intercalaire
- T: théorie ou principe à la base de l'invention
- E: demande faisant interférence
- D: document cité dans la demande
- L: document cité pour d'autres raisons
- &: membre de la même famille, document correspondant

☒ Le présent rapport de recherche a été établi pour toutes les revendications

| Lieu de la recherche | Date d'achèvement de la recherche | Examinateur |
|---|---|---|
| La Haye | 06-08-1981 | RUGGIU |

OEB Form 1503.1 06.78